# EUROPEAN PATENT APPLICATION

(11) **EP 4 635 385 A1**
(43) Date of publication of application: **22.10.2025**
(21) Application number: 23902346.8
(22) Date of filing: 01.11.2023
(51) Int. Cl.: A47K 11/02, B65B 43/16, B65B 51/14, B65B 61/06

(54) **DRY TOILET**

(30) Priority: 15.12.2022 CN 202223374349 U
(71) Applicant: Atelier Shine (Shanghai) Ecological Technology Co., Ltd., Shanghai 200040 (CN)
(72) Inventor: SLINGERLAND, Sophia Elisabeth Dorothea, Shanghai 200030 (CN)
(74) Representative: Naeven, Ralf
(86) International application number: PCT/CN2023/129049
(87) International publication number: WO 2024/125146

(57) **Abstract**

The invention discloses a dry toilet, comprising a bag dispenser, a toilet body, a conveying mechanism, and a sealing and cutting mechanism. The toilet body is provided with a first opening at its upper end and a second opening at its lower end. The bag dispenser is installed at the upper end of the toilet body adjacent to the first opening, and is configured to store continuous bags. The conveying mechanism is fixed within the toilet body and configured to continuously convey bags from the bag dispenser to the bottom of the toilet body. The sealing-cutting mechanism is installed inside the toilet body and disposed below the conveying mechanism. It is configured to seal the bag followed by cutting, with the entire process requiring no water usage, thereby providing convenient and efficient operation.

## Description

### Technical Field

The present invention relates to the technical field of toilets, and more particularly, to a dry toilet.

### Background Art

The shortage of water resources is becoming increasingly severe, and the water waste caused by conventional flush toilets water closets is enormous. Each flush uses a minimum of 5 liters and up to 8 liters of water, with an additional 100 liters of freshwater required to treat the wastewater. This practice is unsustainable as we face significant climate change challenges and rapidly declining groundwater levels due to over-extraction. Water conservation has become an urgent priority.

### Summary of the Invention

To address the above technical problems, the objective of the present invention is to provide a dry toilet that can be used without connecting to plumbing systems.

To achieve the above objective, the present invention provides a dry vacuum toilet comprising:
a toilet body, wherein a first opening and a second opening are formed at an upper end and a lower end of the toilet body, respectively;
a bag dispenser, wherein the bag dispenser is mounted at the upper end of the toilet body, the bag dispenser is configured to store the bags, and the bags in the bag dispenser are conveyable through the first opening to the bottom of the toilet body;
a conveying mechanism fixed inside the toilet body and disposed below the bag dispenser, the conveying mechanism including a clamping mechanism adapted to clamp a bag and to be driven to continuously convey the bag toward the bottom of the toilet body;
a sealing-cutting mechanism, disposed below the conveying mechanism and mounted on the toilet body, for sealing and cutting the bag;
wherein during use, when the conveying mechanism conveys the bag to a position suitable for sealing and cutting, the sealing-cutting mechanism seals and cuts the bag, and the sealed and cut bag falls to the second opening and is extracted by an external vacuum device.

In some embodiments, the bag dispenser comprises:
a dispenser body, wherein the dispenser body is mounted at an upper end of the toilet body corresponding to the first opening, the dispenser body is annularly arranged and provided with an annular storage chamber for storing bags, and a portion of a placed bag is turnable outward along an inner edge or an outer edge of the annular cavity and conveyable downward through the first opening;
a toilet seat, wherein the toilet seat is arranged to match the dispenser body and covers the dispenser body to enclose the storage chamber.

In some embodiments, the apparatus further comprises a support structure mounted within the toilet body and positioned below the bag dispenser. The support structure defines an accommodating space for bag deployment, wherein an inlet is provided at an upper end of the accommodating space and an outlet is provided at a lower end thereof, such that the bag is deployed within the accommodating space along the inlet;
a conveying mechanism is mounted at the outlet of the support structure to convey the bag through the outlet toward the bottom of the toilet body.

In some embodiments, the sidewall of the accommodating space is inclined such that the opening area of the inlet is greater than that of the outlet, and the inlet is annularly adapted to the ring-shaped dispenser body.

In some embodiments, the support structure comprises a cavity formed by four surrounding side panels to define the accommodating space, wherein the inlet is provided at an upper end of the cavity structure, and the outlet is provided at a lower end thereof.

Or the support structure comprises:
a horizontal plate, wherein the outlet is formed in the horizontal plate; and the outlet is configured for passage of the bag there through;
a side bracket, wherein the side bracket is disposed around a periphery of the outlet; a first end of the side bracket is connected to a top portion of the toilet body; a second end of the side bracket is connected to the horizontal plate; an upper end of the side bracket encloses to form the inlet; and the conveying mechanism is fixed to a lower end of the horizontal plate and arranged adjacent to the outlet.

In some embodiments, a limiting structure is provided at the outlet position, wherein side edges of the bag are configured to be conveyed downward along the limiting structure.

The dry vacuum toilet further comprises a power supply assembly mounted on the supporting structure.

In some embodiments, the conveying mechanism further comprises a driving member. The clamping mechanism includes a pair of clamping members for clamping the bag, wherein at least one clamping member is configured to generate friction with the bag. At least one of said clamping members is connected to the driving member so as to be driven to rotate or translate, thereby conveying the bag downward.

In some embodiments, the conveying mechanism further comprises a mounting frame installed adjacent to the outlet at the lower end of the support structure;
clamping members are a pair of oppositely arranged and rotatable rollers, both rotatably connected to the mounting frame, wherein the driving member is mounted on the mounting frame and connected to one of the rollers to drive its rotation, thereby conveying the bag downward.

In some embodiments, the sealing and cutting mechanism comprises:
a pressing member and a fixed frame cooperatively arranged with the pressing member, wherein when the pressing member is driven to push the bag to the fixed frame, a portion of the bag is clamped between the pressing member and the fixed frame such that upper and lower sections of the clamped portion are isolated from each other, and wherein the fixed frame is mounted on the support structure;
a first telescopic member fixed to an inner wall of the toilet body or to the support structure, wherein a telescopic end of the first telescopic member is connected to the pressing member so as to drive the pressing member toward or away from the fixed frame;
a heating and cutting mechanism mounted on the fixed frame, wherein under the action of the first actuator, the pressing member cooperates with the heating and cutting mechanism to thermally seal and then cut the bag.

In some embodiments, the pressing member includes a push rod, and the heating and cutting mechanism includes a heat melting member. The heat melting member is mounted on the fixed frame, and the push rod is configured to cooperate with the heat melting and sealing member. This arrangement allows the heat melting and sealing member to thermally seal a clamped portion of the bag body and subsequently melt-cut the sealed portion.;
or, the heating-cutting mechanism comprises a sealing mechanism and a cutting mechanism fixed on the fixed frame, wherein the pressing member comprises a push rod correspondingly arranged with the sealing mechanism; A cutting mechanism comprises: a blade part disposed on the fixed frame, and a cutting accessory cooperatively arranged with the blade part, wherein one end of the cutting accessory is pivotally connected to the fixed frame to form a scissor structure with the blade part; The first telescopic member comprises two units respectively fixed to the inner wall of the toilet body or the support structure, with their extendable ends connected to the push rod and the other end of the cutting accessory respectively; during use, the bag is first sealed by the sealing mechanism and then conveyed by the conveying mechanism to a cutting position suitable for the cutting mechanism to perform cutting.

In some embodiments, the apparatus further includes a pushing mechanism positioned below the sealing and cutting mechanism. The pushing mechanism comprises:
a fixing member securely mounted on an inner wall of the toilet body;
a second telescopic member connected to the fixing member; and
a push rod fixed to the extendable end of the second telescopic member.

In some embodiments, the apparatus further includes a bracket located below the pushing mechanism. The bracket comprises: a horizontal base part; and an inclined part elastically connected to the base part at an angle, wherein the base part is provided with a U-shaped opening matching the second opening; the base part is arranged substantially parallel to the second telescopic member; and the connection between the base part and the inclined part corresponds to the conveying mechanism, allowing the cut bag to fall onto the base part;
or, the bracket is positioned below the pushing mechanism, comprising a support part arranged substantially parallel to the second telescopic member and a horizontal part. The supporting part is inclined; and a horizontal part disposed obliquely above the supporting part; wherein a junction between the supporting part and the horizontal part aligns with the conveying mechanism to allow the cut bag to fall onto the supporting part.

Compared with the prior art, the dry vacuum toilet provided by the present invention has the following advantageous effects:
The dry vacuum toilet according to the present invention achieves sealed waste collection without requiring connection to any water pipes. Through the structural design of the bag dispenser, conveying mechanism, and sealing-cutting mechanism, the system utilizes continuous bags for waste collection. After collection, the sealing-cutting mechanism performs cutting and separation, with the entire process being environmentally friendly and achieving water-saving effects. The vacuum toilet of the present invention is characterized by a structurally simplified configuration that enables user-friendly and highly efficient operation.

### Description of Drawings

The following describes preferred embodiments of the present invention with reference to the accompanying drawings, providing clear and comprehensive explanations of the aforementioned features, technical characteristics, advantages, and implementation methods.
FIG. 1 is a schematic perspective view showing the external structure of an embodiment of the present invention;
FIG. 2 is a partial cross-sectional schematic view of FIG. 1 at one viewing angle;
FIG. 3 is an exploded structural schematic view of FIG. 1;
FIGS. 4 and 5 are schematic diagrams of the three-dimensional structure of a vacuum toilet of another embodiment of the present invention;
FIG. 6 is a top view of a preferred embodiment of the present invention;
FIG. 7 is a cross-section A-A of FIG. 6;
FIG. 8 is a schematic view of FIG. 7 combined with a collection tank;
FIG. 9 is a schematic perspective view with the toilet body removed;
FIG. 10 is an enlarged schematic view of portion B in FIG. 9;
FIG. 11 is a top view of a partial structure;
FIG. 12 is a schematic view of the dispenser body structure;
FIG. 13 is a schematic view showing the connection between the partial structure of the support structure and the seat lid;
FIG. 14 is a schematic view of the conveying mechanism;
FIG. 15 is a schematic view of the sealing mechanism;
FIG. 16 is a schematic view showing the connection between the cutting mechanism and the partial structure of the support structure;
FIG. 17 is a schematic structural view of the fixed frame;
FIG. 18 is a schematic structural view of the pushing mechanism.

### DESCRIPTION OF REFERENCE NUMERALS

100. Bag Dispenser; 110. Toilet seat; 120. Dispenser body; 121. Outer ring; 122. Inner ring; 123. Storage chamber;
200. Toilet body; 210. Toilet cover; 211. First opening; 220. Toilet body; 221. Second opening;
300. Support structure; 310. Side bracket; 320. Horizontal plate; 321. Outlet; 322. Limiting notch; 330. Fixed frame; 331. Upper horizontal fixed portion; 332. Vertical fixed portion; 333. Lower horizontal fixed portion; 334. Blade part; 335. Installation position; 340. Inlet;
400. Power supply; 410. Power supply body; 420. Power bracket; 430. Transformer;
500. Conveying mechanism; 510. Mounting frame; 520. Driving member; 530. Rotating shaft; 540. Roller;
550. O-ring; 560. Fixing bolt; 570. Bearing;
600. Sealing mechanism; 610. Connecting member 620. First telescopic member A; 630. push rod; 640A. Heat sealing member; 640B. Heat melting member;
700. Cutting mechanism; 710. Fixing member 720. First telescopic member B; 730. Cutting accessory;
800. Pushing mechanism; 810. Second telescopic member; 820. Push rod;
900. Bracket; 910. Base part 911. U-shaped opening; 920. Inclined part.
1000. Collection box.
1100. Seat lid

### Detailed Description of Embodiments

In order to more clearly illustrate the technical solutions in the embodiments of the present invention or the prior art, the specific implementation modes of the present invention will be described below with reference to the accompanying drawings. It will be apparent that the drawings described below represent only some embodiments of the present invention. Persons of ordinary skill in the art may derive other drawings and implementations from these illustrations without creative effort, within the scope of the present disclosure.

For clarity of illustration, the drawings schematically show only those portions relevant to the invention, and do not represent the actual structural configuration of the product. For clarity and conciseness of the drawings, certain figures may depict only one representative example of components having identical structures or functions, with only one such component being illustrated or labeled. In this specification, the term "a" or "an" refers not only to "one" but also encompasses "one or more" unless explicitly stated otherwise.

It is to be further understood that the term "and/or" as used in this specification and appended claims refers to any and all possible combinations of one or more of the associated listed items, including all such combinations.

It is hereby clarified that, unless otherwise expressly specified or limited in this specification, the terms "mounted," "connected," and "coupled" shall be interpreted broadly to include, without limitation: fixed connections, detachable connections, or integral connections; mechanical connections or electrical connections; direct connections or indirect connections through intermediate components; and internal communication between two components. For a person skilled in the art, the specific meanings of the aforementioned terms in the present invention may be understood according to actual circumstances.

Furthermore, in the description of the present application, the terms "first," "second," etc. are used solely for distinguishing between similar elements and shall not be construed as indicating or implying relative importance.

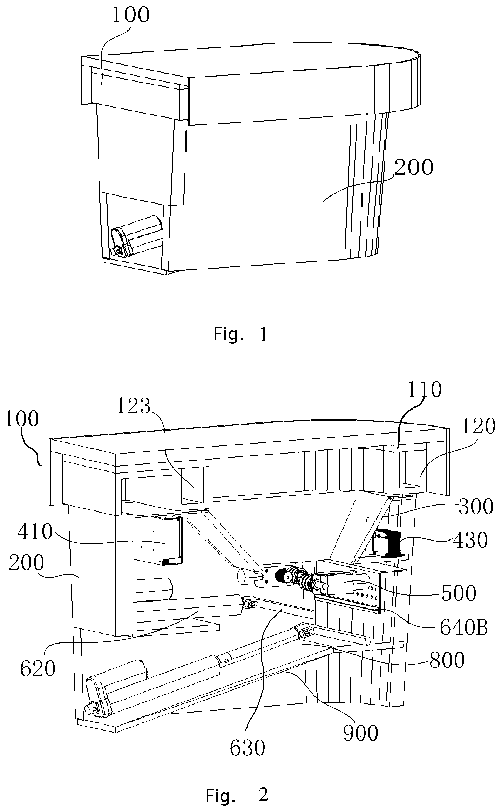

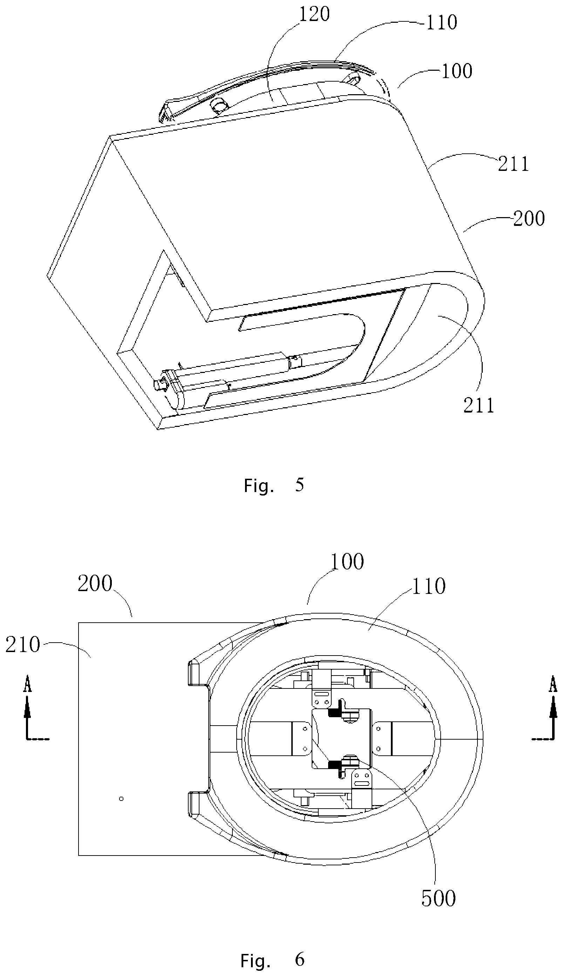

With reference to FIGS. 1-6, a dry vacuum toilet is disclosed, comprising: a bag dispenser 100, a toilet body 200, a conveying mechanism 500, and a sealing-cutting mechanism. The toilet body 200 is provided with a first opening 211 at its upper end and a second opening 221 at its lower end. The bag dispenser 100 is installed adjacent to the first opening 211 at the upper end of the toilet body 200 and is configured to store continuous bags. During use, the bags are dispensed from the bag dispenser 100 to the bottom of the toilet body 200, wherein the bags remain continuously connected until fully consumed or until the remaining portion becomes unusable, at which point they are replaced. The bags in the bag dispenser 100 are fed through the first opening 211 by folding inward or outward along the edge of the bag dispenser 100 and are conveyed by the conveying mechanism 500 to the base portion 910 of the toilet body 200. In specific implementations, the bags may be folded either inward or outward.

The conveying mechanism 500 is fixed inside the toilet body and is configured to continuously transport bags from the bag dispenser 100 to the base portion 910 of the toilet body 200. The conveying mechanism 500 may be mounted on the inner wall of the toilet body 200 via a bracket or a fixing structure, or may be installed inside the toilet body via the support structure 300. The specific structure of the support structure 300 and the detailed installation of the conveying mechanism 500 will be described in detail below. The sealing-cutting mechanism is installed inside the toilet body and is disposed below the conveying mechanism 500 for sealing and cutting the bags. During installation, the sealing/cutting mechanism may be mounted on the inner wall of the toilet body 200 via a fixing structure or by other means. The specific installation method and structure of the sealing/cutting mechanism will be described in detail below.

Prior to initial use, the sealing-cutting mechanism seals the lower end of the bag, after which the toilet is ready for operation. wherein during use, when the conveying mechanism transports the bag to a position suitable for sealing and cutting, the sealing-cutting mechanism clamps, seals, and cuts the bag. The sealed and cut bag then falls through the second opening and is extracted by an external vacuum device. Alternatively, when the conveying mechanism 500 further transports the bag downward to a position suitable for additional sealing, the sealing and cutting mechanism performs further sealing to encapsulate excrement within the bag, followed by cutting along the sealed portion. The cut bag containing excrement falls into the collection tank 1000 at the base portion 910 of the toilet body 200 and is evacuated to the collection tank 1000 by the external vacuum device. Simultaneously, the bag's opening is resealed for subsequent use.

In one specific embodiment, as shown in FIG. 1-3, the toilet body 200 has openings at both its upper and lower ends, namely a first opening 211 and a second opening 221. The bag dispenser 100 is installed at the upper end of the toilet body 200, with its shape adapted to match the first opening 211 of the toilet body 200 to seal the upper end of the toilet body 200. The bag dispenser 100 comprises a storage chamber 123 for housing continuous bags. The dispenser body 120 is installed at the upper end of the toilet body 200 corresponding to the position of the first opening 211. The dispenser body 120 is annularly configured and provided with an annular storage chamber 123 for storing bags, with an opening at its upper end for bag placement. The bags are sleeved within the annular chamber, and after placement, a portion of each bag is folded outward along either the inner or outer edge of the annular chamber for downward conveyance through the first opening 211. The toilet seat 110 is matched with the dispenser body 120 and covers the dispenser body 120 to enclose the storage chamber 123. In this embodiment, the toilet seat 110 either fully covers the dispenser body 120 or is rotatably connected at one end to the dispenser body 120, allowing the dispenser body 120 to be rotationally covered by the toilet seat 110. The toilet seat 110 serves dual purposes when covering the annular storage chamber 123, functioning as a seating surface while utilizing its own weight to press down the upper end of the bag, thereby maintaining optimal bag deployment during both transport and static states. In this embodiment, the opening of the annular storage chamber 123 is flush to facilitate effective pressure from the toilet seat 110, though alternative configurations where the inner circumference of the annular storage chamber 123 is slightly lower than the outer circumference are also feasible, as demonstrated in another embodiment of the bag dispenser 100 described subsequently.

In the present embodiment, the inner ring 122 of the annular storage chamber 123 incorporates a bionic design adapted for human seating on the toilet seat 110. Furthermore, in this embodiment, the bags are folded inward along the upper edge of the inner ring 122 opening of the storage chamber 123 and extend downward, thereby enabling conveyance of the bags to the base portion 910 of the toilet body 200.

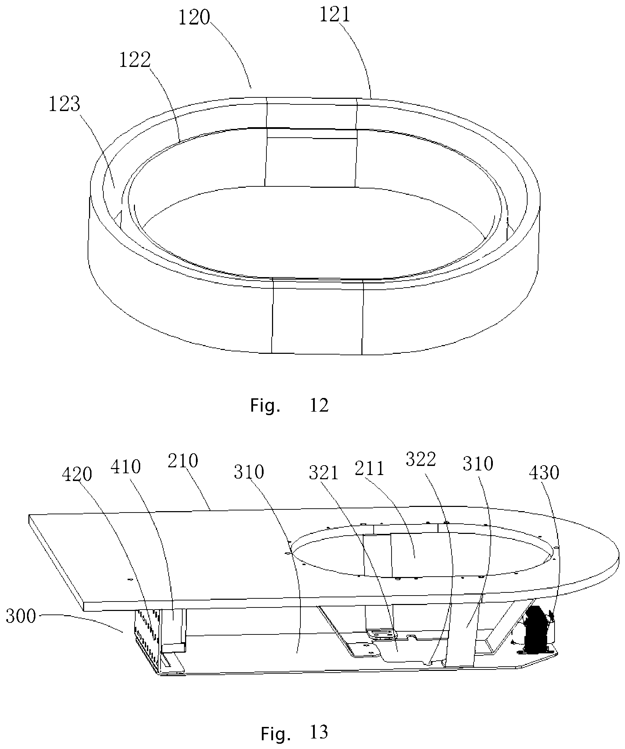

Alternatively, the bag dispenser 100 may adopt different design configurations. In another embodiment shown in FIGs. 1-6 and 9, the dispenser body 120 is fixed to the upper end of the toilet body 200, with the toilet seat 110 pivotally attached at one side to cover the upper end of the dispenser body 120 for user seating. As illustrated in FIG. 12, the dispenser body 120 comprises an inner ring 122 and an outer ring 121, both fixed at their lower ends to the upper end of the toilet body 200. The outer ring 121 surrounds the inner ring 122, with a predetermined spacing maintained between the inner wall of the outer ring 121 and the inner wall of the inner ring 122 to form the storage chamber 123. The bags are sleeved within the storage chamber 123 along the inner ring 122, where the height of the inner ring 122 is lower than that of the outer ring 121 to facilitate inward folding of the bags. The bags are folded outward from the inner ring 122, expanded, and then gripped at their edges by the conveying mechanism 500 for downward transportation.

To accommodate the arrangement of the conveying mechanism 500 and other structures within the toilet, the dry vacuum toilet further comprises a support structure 300. **In** a specific embodiment, as shown in FIGs. 2-3, the support structure 300 includes a cavity structure formed by four surrounding side panels to create an accommodating space. An inlet 340 is provided at the upper end of the cavity structure, and an outlet 321 is provided at the lower end of the cavity structure. The sidewalls of the accommodating space are inclined such that the opening area of the inlet 340 is larger than that of the outlet 321, and the inlet 340 is annularly adapted to the annular distributor body 120. The larger opening area of the inlet 340 is more conducive to the unfolding of the bag. The upper outer edge of the support structure 300 extends outward appropriately to match the upper end of the toilet body 200 opening. Similarly, the lower end of the support structure 300 extends to form a corresponding fixed platform for mounting the transformer 430 described below.

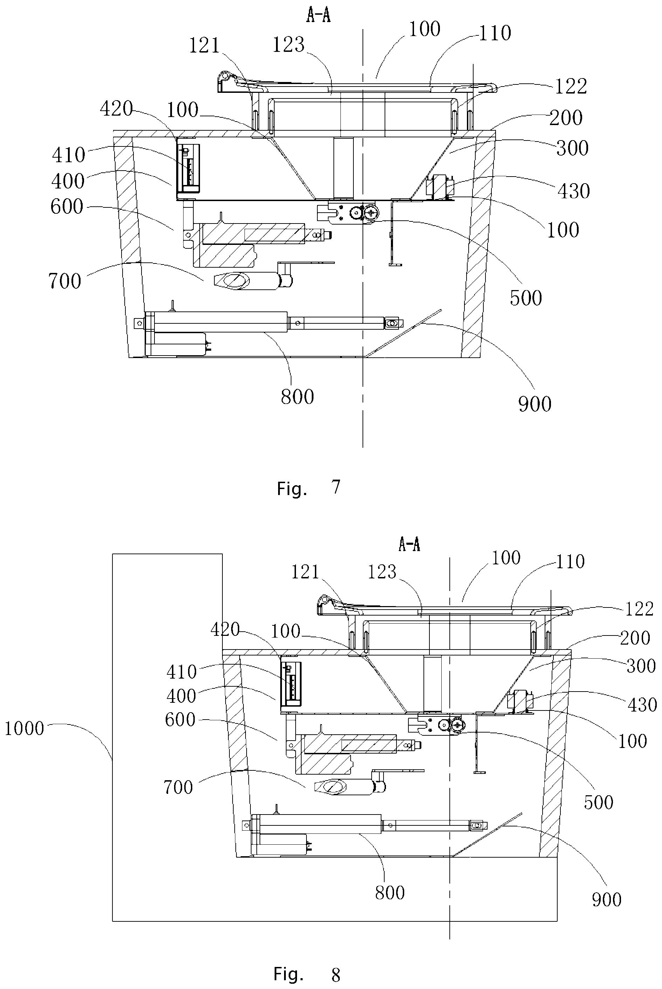

For the support structure 300, in another specific embodiment, as shown in FIGs. 7-9 and 13, the support structure 300 includes a horizontal plate 320 and several side brackets 310. The horizontal plate 320 is provided with an outlet 321, which is positioned opposite the first opening 211 to allow the bag to pass through the first opening 211 and the outlet 321 into the inner base portion 910 of the toilet. The opening area of the first opening 211 is larger than that of the outlet 321, causing the sidewalls of the bag to be inclined to facilitate the dropping of excrement.

The horizontal plate 320 is provided with a limiting notch 322 at the outlet 321 to form a limiting structure. The limiting notch 322 is configured to restrict the edge of the bag, allowing the edge of the bag to be conveyed downward along the limiting notch 322, thereby preventing twisting of the bag during conveyance.

One end of each of the several side brackets 310 is fixed to the edge of the outlet 321, while the other end is fixed to the lower end of the toilet cover 210 and secured along the edge of the first opening 211. The side brackets 310 are arranged in an inclined manner to provide support for the inclined sidewalls of the bag. Similarly, the space enclosed by the side brackets 310 in this embodiment serves the same function as the support structure 300 described in the aforementioned embodiment, wherein the cross-sectional area of the upper portion of the space is larger than that of the lower portion to accommodate user usage.

Naturally, a power supply unit is also required during actual use. The power supply unit is configured to deliver electricity to the conveying mechanism 500 and the sealing-cutting mechanism, enabling the vacuum toilet to complete the entire bag conveyance and sealing-cutting process. Specifically, the power supply unit includes a power module mounted on the support structure 300. As shown in FIGs. 7-9, the power module comprises a power source body 410 and a transformer 430. The power source body 410 is mounted on the horizontal plate 320 via a power bracket 420, while the transformer 430 is installed on the horizontal plate 320 to regulate the operating voltage. Regarding the installation of the power module, in another embodiment, the mounting positions of the power source body 410 and the transformer 430 are as shown in FIG.2. Of course, the power module may also adopt other installation methods, and the specific mounting positions are not overly limited herein.

As for the conveying mechanism 500, during specific implementation, the conveying mechanism 500 is fixed inside the toilet, i.e., mounted on the support structure 300. The specific structure of the support structure 300 is as described above. The conveying mechanism 500 is arranged below the bag dispenser 100. Specifically, the conveying mechanism 500 includes a clamping mechanism configured to grip the bag and be driven to continuously convey it toward the base portion 910 of the toilet body 200. Furthermore, the conveying mechanism 500 also includes a mounting frame 510 installed near the outlet 321 at the lower end of the support structure 300. The clamping member consists of a pair of oppositely arranged and rotatable rollers, both pivotally connected to the mounting frame 510. The driving member 520 is mounted on the mounting frame 510 and connected to one of the rollers to drive its rotation, thereby conveying the bag downward.

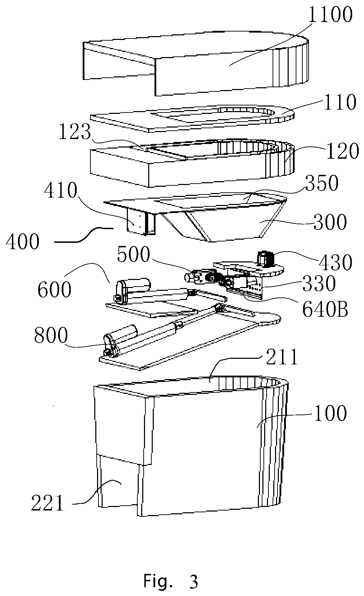

In a specific embodiment, referring to FIG.3 and FIGS.7-11, and FIG. 14, the conveying device comprises a mounting frame 510, a driving member 520, and a clamping member. The mounting frame 510 is installed at the lower end of the horizontal plate 320 and positioned adjacent to the through-hole. The driving member 520 is mounted on the mounting frame 510, with the power input end of the clamping member connected to the driving member 520. The driving member 520 drives the clamping member to convey the bag downward.

The specific clamping member comprises a rotating shaft 530, a roller 540, a fixing rod, and a rotating element. One end of the rotating shaft 530 passes through one side of the mounting frame 510 and connects to the driving end of the driving member 520, while the other end of the rotating shaft 530 is sleeved with a sleeve. In specific implementations, the sleeve is further sleeved with an O-ring 550, which is fitted over the roller 540.

Furthermore, the clamping member also includes a fixing rod and a rotating element. The fixing rod is a fixing bolt 560, with one end secured to the mounting frame 510 via a nut and the other end mounted with the rotating element. The rotating element can rotate around the fixing bolt 560, and its outer edge is arranged opposite the outer edge of the roller 540 to facilitate feeding the edge of the bag into the gap between the roller 540 and the rotating element. The bag is conveyed downward by the friction between the roller 540 and the bag, while the rotating element serves as a passive rotating component, cooperating with the roller 540. In specific implementations, the fixing bolt 560 is a bearing 570. Of course, other components capable of rotating around the fixing bolt 560 may also be used.

To enhance stability during the conveying process and prevent twisting or other issues, two conveying mechanisms 500 are symmetrically arranged in the specific implementation. This allows the conveying mechanisms 500 to grip both sides of the bag and convey it downward through the rotation of the rollers 540.

As shown in FIGS. 2-3, in another specific embodiment, the conveying mechanism 500 is installed at the outlet 321, and its structure is the same as that described in the aforementioned embodiment. Of course, the clamping member is not limited to the roller 540 or the rolling body composed of multiple bearings 570 as described in this application. During specific implementation, the two rolling bodies may be identical or different. Of course, to achieve the downward transport of the bag, two identical clamping components are arranged oppositely, with one clamping component moving up and down in a linear motion relative to the other, thereby using friction to transport the bag downward. This implementation is also within the protection scope of this embodiment. During specific implementation, appropriate selections may be made based on actual conditions.

As for the sealing and cutting mechanism, it comprises a pressing member, a fixed frame 330 cooperating with the pressing member, the first telescopic member, and the heating and cutting mechanism. The pressing member and the fixed frame 330 cooperate such that when the pushing mechanism delivers the bag to the fixed frame 330, a portion of the bag is clamped, isolating the upper and lower sections of the clamped area. The pressing member and the fixed frame 330 cooperate such that when the pushing mechanism delivers the bag to the fixed frame 330, a portion of the bag is clamped, isolating the upper and lower sections of the clamped area. The first telescopic member is fixed either to the inner wall of the toilet body 200 or to the support structure 300 as described in the aforementioned embodiments. The telescopic end of the first telescopic member is connected to the pressing member to drive the pressing member toward or away from the fixed frame 330. The heating and cutting mechanism is mounted on the fixed frame 330. Under the action of the first telescopic member, the pressing member cooperates with the heating and cutting mechanism to heat-seal and subsequently cut the bag body. When the first telescopic member drives the pressing member away from the fixed frame 330, the space between the pressing member and the fixed frame 330 allows the bag body to assume a vertically descending state, facilitating the entry of excrement into the bottom of the bag body during use. When the first telescopic member drives the pressing member toward the fixed frame 330, a portion of the bag body containing excrement is clamped, isolating the excrement-containing bottom portion from the bag body above the pressing member. The heating and cutting mechanism then performs heating and cutting operations. In practical use, after the user has excreted, the conveying mechanism may further advance the bag downward before performing sealing and cutting. The bottom of the cut bag remains in a sealed state and can then be conveyed further downward by the conveying mechanism 500 to an appropriate position for subsequent use. Specific adjustments may be made according to the actual usage environment.

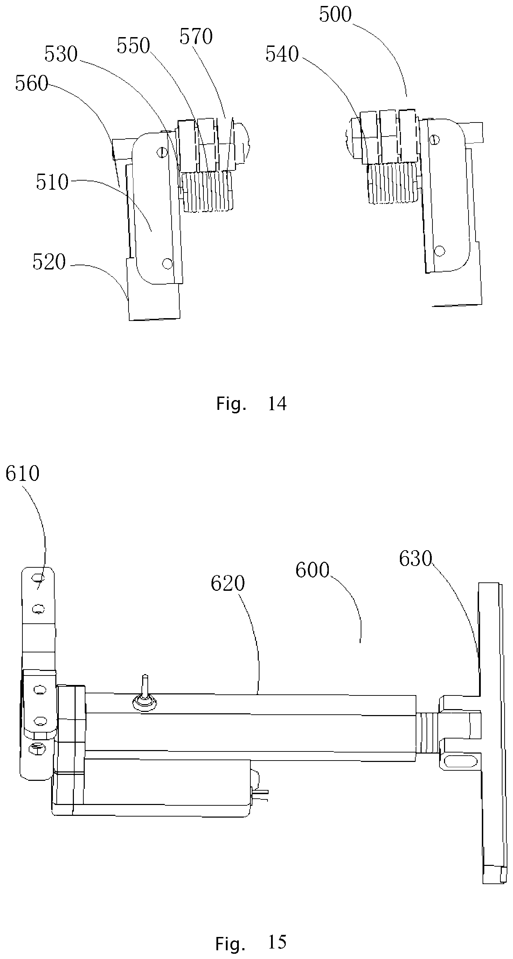

Regarding the sealing and cutting mechanism, in a specific embodiment, as shown in FIGs. 2-3, the pressing member includes a push rod 630, and the heating and cutting mechanism includes a thermal fusion member 640B. The thermal fusion member 640B is mounted on the fixed frame 330, and the push rod 630 matches the thermal fusion member 640B to thermally seal the clamped portion of the bag and then melt-cut the sealed bag. Specifically, the first telescopic member A620 is fixed to the inner wall of the toilet body 200 via a mounting bracket, with its telescopic end connected to the push rod 630. The fixed frame 330 is arranged opposite the push rod 630. The first telescopic member 620A drives the push rod 630 to move away from or toward the fixed frame 330 through its telescopic motion. The fixed frame 330 is fixed to the support structure 300. The fixed frame 330 is fixed to the support structure 300. In this embodiment, the push rod 630 is mounted on the telescopic end of the first telescopic member A, as shown in FIG.15. However, one end of the push rod 630 is mounted on the telescopic end of the first telescopic member A, rather than the middle portion of the push rod 630 being mounted on the telescopic end of the first telescopic member A as depicted in Figure 15. The specific arrangement is shown in FIGs. 2-3.

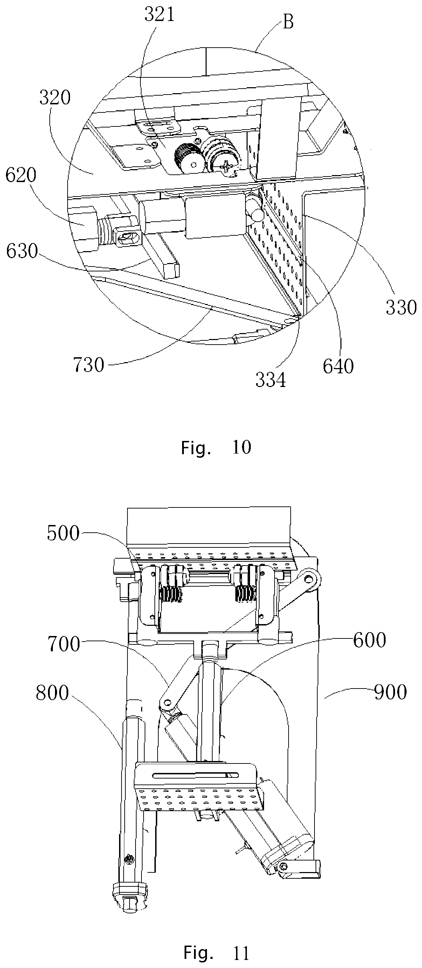

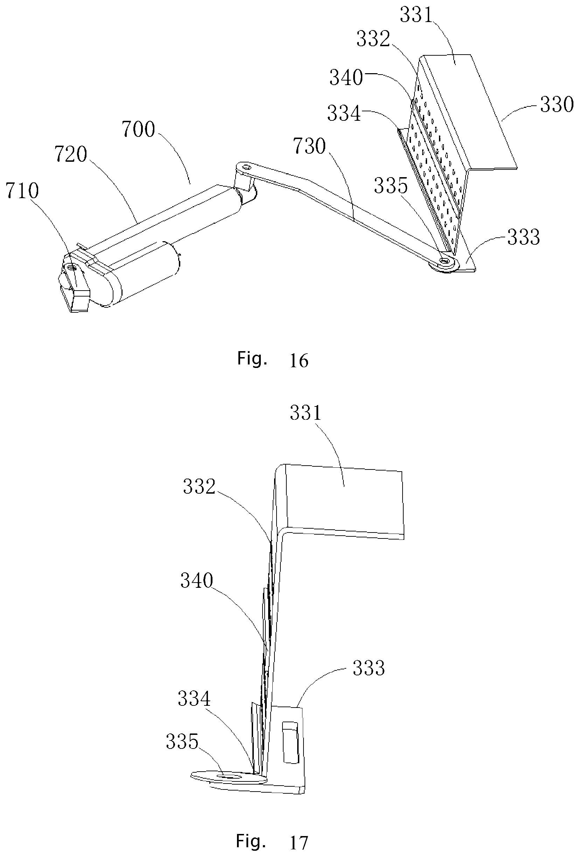

In another embodiment, referring to FIGs. 7-9, 11, and 15, the sealing and cutting mechanism includes a sealing mechanism 600 and a cutting mechanism 700. The sealing mechanism 600 comprises the rear fixed frame 330, the first telescopic member A620, and the heat sealing member 640A fixed to the fixed frame 330. The first telescopic member 620A is secured to the lower end of the horizontal plate 320 via a connecting member 610. The push rod 630 is fixed to the telescopic end of the first telescopic member 620A, and the heat sealing member 640A is fixed to the fixed frame 330. The length of the heat sealing member 640A is adapted to the width of the bag. The heat sealing member 640A is specifically a heating plate, which seals the clamped portion of the bag through heating. The connection between the first telescopic member 620A and the push rod 630 is as shown in FIG.15. The connection between the first telescopic member 620A and the push rod 630 is as shown in FIG.15. Regarding the fixed frame 330 in this embodiment, specifically referring to FIGs.10 and 16, the fixed frame 330 includes an upper horizontal fixed portion 331, a vertical fixed portion 332, and a lower horizontal fixed portion 333. The vertical fixed portion 332 connects the upper horizontal fixed portion 331 and the lower horizontal fixed portion 333. The upper horizontal fixed portion 331 and the lower horizontal fixed portion 333 are arranged horizontally, while the vertical fixed portion 332 is perpendicular to the telescopic direction of the first telescopic member 620A. The vertical fixed portion 332 is provided with the heat sealing member 640A, which is adapted to the push rod. During sealing, the first telescopic member 620A drives the push rod 630 to press the bag between the push rod 630 and the heat sealing member 640A, after which the heat sealing member 640A performs heat sealing.

Referring to FIG. 16, the cutting mechanism 700 comprises the fixing member 710, the first telescopic member B720, and the cutting accessory 730. The first telescopic member B720 is fixed inside the toilet through the fixing member 710, and one end of the cutting accessory 730 is hinged to the telescopic end of the first telescopic member B720. As shown in FIGs. 16-17, the lower horizontal fixing portion 333 is provided with a blade part 334 along its lengthwise direction. One end of the lower horizontal fixing portion 333 is provided with a mounting position 335, and the other end of the cutting accessory 730 is rotatably connected to the mounting position 335. The cutting accessory 730 matches the blade part 334, such that the telescopic motion of the second telescopic member drives the cutting accessory 730 to rotate around the mounting position 335, forming a scissor mechanism to cut the bag, thereby enabling the bag containing excrement to be cut and separated. Specifically, the cutting accessory 730 is a metal sheet that cooperates with the blade part 334 to form a scissor structure, thereby cutting the bag and separating the excrement-containing portion from the bag body above the push rod 630.

In this embodiment, before use, the sealing mechanism 600 seals the lower end of the bag, after which it is ready for use. When the conveying mechanism 500 further advances the bag downward to a position suitable for additional sealing, the sealing and cutting mechanism performs further sealing to encapsulate the excrement within the bag. The bag is then conveyed downward by the conveying device. Upon reaching a position suitable for cutting, the cutting device executes the cutting operation.

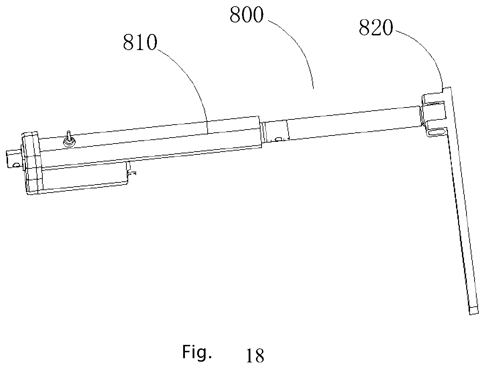

Referring to FIGs 2-3, 9, and 18, the apparatus further includes a pushing mechanism 800. The pushing mechanism 800 comprises a second telescopic member 810 and a push rod 820. The second telescopic member 810 is fixed to the toilet body 220, and the push rod 820 is fixed to the stationary end of the second telescopic member 810. During initial use, the second telescopic member 810 retracts the push rod 820 to one side. After use and following sealing/cutting, the push rod 820 pushes the excrement-filled bag to the lower opening of the toilet body, facilitating extraction by an external vacuum device.

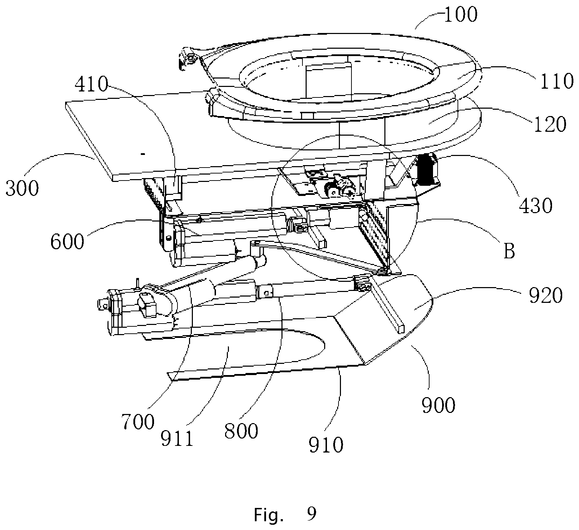

As shown in FIG. 9, the apparatus further includes a support frame 900 comprising the horizontal base part 910 and the inclined part 920. The base part 910 features a U-shaped opening 911 aligned with the second opening 221. After cutting, the severed bag falls onto the inclined part920, rebounds, and slides into the U-shaped opening 911, whereupon the external vacuum system extracts the waste-containing bag into collection box 1000. In another embodiment, as shown in FIGS. 2-3, the apparatus comprises an inclined support part and a horizontal part. The inclination angle of the support part is substantially similar to that of the second telescopic member 810, enabling the second telescopic member to effectively guide the excrement-containing bag along the support part to slide down to the second opening 221 at the bottom of the toilet body, facilitating extraction by an external vacuum system.

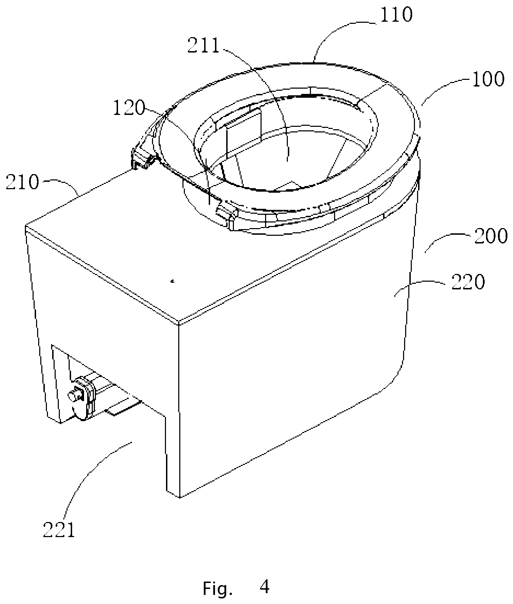

In the aforementioned embodiment, the toilet body 200 is equipped with the toilet lid 1100, as specifically illustrated in FIGs. 2-3. Of course, the toilet lid 1100 can also be installed in the images shown in FIGS.4-9.

It should be noted that the above embodiments may be freely combined as needed. These implementations represent only preferred embodiments of the present invention. It must be emphasized that for those skilled in the art, various modifications and refinements may be made without departing from the principles of the invention, and such modifications and refinements shall also fall within the protection scope of the present invention.

## Claims

1. A dry toilet, **characterized by** comprising:
a toilet body, wherein a first opening and a second opening are formed at an upper end and a lower end of the toilet body, respectively;
a bag dispenser, wherein the bag dispenser is mounted at the upper end of the toilet body and configured to store the bags, and the bags in the bag dispenser are conveyable through the first opening to the bottom of the toilet body;
a conveying mechanism, wherein the conveying mechanism is fixed inside the toilet body and disposed below the bag dispenser, the conveying mechanism includes a clamping mechanism that is configured to clamp the bag and be driven to continuously convey bags toward the bottom of the toilet body;
a sealing and cutting mechanism, disposed below the conveying mechanism for sealing and cutting the bag;
wherein during use, when the conveying mechanism conveys the bag to a position suitable for sealing and cutting, the sealing and cutting mechanism seals and cuts the bag, and the sealed and cut bag falls to the second opening.

2. The dry toilet according to claim 1, **characterized in that**,
the bag dispenser includes:
a dispenser body, wherein the dispenser body is mounted at an upper end of the toilet body corresponding to the first opening, the dispenser body is annularly arranged and provided with an annular storage chamber for storing bags, and a portion of a placed bag is turnable outward along an inner edge or an outer edge of the annular cavity and conveyable downward through the first opening;
a toilet seat, wherein the toilet seat is arranged to match the dispenser body and covers the dispenser body to enclose the storage chamber.

3. The dry toilet according to claim 1, **characterized in that**,
a support structure installed inside the toilet body and disposed below the bag dispenser, wherein the support structure is provided with an accommodation space for bag deployment, the accommodation space having an inlet at an upper end thereof and an outlet at a lower end thereof, wherein the bag is deployable through the inlet into the accommodation space, and
a conveying mechanism is mounted at the outlet of the support structure to convey the bag through the outlet toward the bottom of the toilet body.

4. The dry toilet according to claim 3, **characterized in that** a side wall of the accommodating space is inclinedly arranged such that an opening area of the inlet is larger than an opening area of the outlet, and the inlet is annularly adapted to the annular dispenser body.

5. The dry toilet according to claim 4, **characterized in that**,
a support structure comprises a cavity structure formed by four side plates enclosing to define the accommodation space, the inlet is formed at an upper end of the cavity structure, the outlet is formed at a lower end of the cavity structure;
or the support structure comprises:
a horizontal plate, wherein the outlet is formed in the horizontal plate; and the outlet is configured for passage of the bag there through;
a side bracket, wherein the side bracket is disposed around a periphery of the outlet; a first end of the side bracket is connected to a top portion of the toilet body; a second end of the side bracket is connected to the horizontal plate; an upper end of the side bracket encloses to form the inlet; and the conveying mechanism is fixed to a lower end of the horizontal plate and arranged adjacent to the outlet.

6. The dry toilet according to claim 5, **characterized in that**,
a limiting structure disposed at the outlet, wherein a side edge of the bag is conveyable downward along the limiting structure;
The dry vacuum toilet further comprises a power supply assembly mounted on the supporting structure.

7. The dry toilet according to any one of claims 3-6, **characterized in that**,
a conveying mechanism further comprises: a driving member; and a clamping mechanism including a pair of clamping members for clamping the bag, wherein at least one clamping member is in frictional contact with the bag, and at least one of the clamping members is connected to the driving member to be driven to rotate or translate for conveying the bag downward.

8. The dry toilet according to claim 7, **characterized in that**,
a conveying mechanism further comprises a mounting frame installed adjacent to the outlet at the lower end of the support structure;
clamping members are a pair of oppositely arranged and rotatable rollers, both rotatably connected to the mounting frame, wherein the driving member is mounted on the mounting frame and connected to one of the rollers to drive its rotation, thereby conveying the bag downward.

9. The dry toilet according to claim 8, **characterized in that** the sealing and cutting mechanism includes:
A pressing member and a fixed frame cooperatively arranged with the pressing member, wherein when the pressing member is driven to push the bag to the fixed frame, a portion of the bag is clamped between the pressing member and the fixed frame such that upper and lower sections of the clamped portion are isolated from each other, and wherein the fixed frame is mounted on the support structure;
a first telescopic member, wherein the first telescopic member is fixed to an inner wall of the toilet body or to the support structure; a telescopic end of the first telescopic member is connected to the pressing member; and the first telescopic member is configured to drive the pressing member to move toward or away from the fixed frame;
a heating and cutting mechanism mounted on the fixed frame, wherein under the action of the first actuator, the pressing member cooperates with the heating and cutting mechanism to thermally seal and then cut the bag.

10. The dry toilet according to claim 9, **characterized in that**,
a pressing member comprises a push rod, and the heating-cutting mechanism comprises a heat-melting member mounted on the fixed frame, wherein the push rod is matched with the heat-melting member to enable the heat-melting member to thermally seal the clamped portion of the bag and subsequently melt-cut the sealed bag portion;
or, the heating-cutting mechanism comprises a sealing mechanism and a cutting mechanism fixed on the fixed frame, wherein the pressing member comprises a push rod correspondingly arranged with the sealing mechanism; A cutting mechanism comprises: a blade part disposed on the fixed frame, and a cutting accessory cooperatively arranged with the blade part, wherein one end of the cutting accessory is pivotally connected to the fixed frame to form a scissor structure with the blade part; The first telescopic member comprises two units respectively fixed to the inner wall of the toilet body or the support structure, with their extendable ends connected to the push rod and the other end of the cutting accessory respectively; during use, the bag is first sealed by the sealing mechanism and then conveyed by the conveying mechanism to a cutting position suitable for the cutting mechanism to perform cutting.

11. The dry toilet according to claim 1, **characterized by** further comprising a pushing mechanism located below the sealing and cutting mechanism, the pushing mechanism comprising:
a fixing member fixed to the inner wall of the toilet body;
a second telescopic member connected to the fixing member; and
a push rod fixed to the extendable end of the second telescopic member.

12. The dry toilet according to claim 11, **characterized in that**,
a bracket located below the pushing mechanism, wherein the bracket comprising: a base part and an inclined part arranged at an angle to the base , wherein the base part is horizontally disposed, the inclined part is elastically connected to the base part, the base part is provided with a U-shaped opening matching the second opening, the base part is substantially parallel to the second actuator, and the connection between the base part and the inclined part corresponds to the position of the conveying mechanism, allowing the cut bag to fall onto the base part;
or, the bracket is positioned below the pushing mechanism, comprising a support part arranged substantially parallel to the second telescopic member and a horizontal part. The supporting part is inclined; and a horizontal part disposed obliquely above the supporting part; wherein a junction between the supporting part and the horizontal part aligns with the conveying mechanism to allow the cut bag to fall onto the supporting part.

13. The dry toilet according to claim 1, **characterized by**
further comprising a collection tank, into which the sealed and cut bags fall after passing through the second opening.

14. The dry toilet according to claim 1, **characterized by**
further comprising a collection tank and an external vacuum device, where the sealed and cut bag containing excrement falls into the second opening and is then evacuated to the collection tank by the external vacuum device.
